# EUROPEAN PATENT APPLICATION

(11) **EP 0 939 333 A1**
(43) Date of publication of application: **01.09.1999**
(21) Application number: 97909666.6
(22) Date of filing: 29.10.1997
(51) Int. Cl.: G03B 21/10, H01L 33/00, H04N 5/74

(54) **BACK PROJECTION DISPLAY**

(30) Priority: 31.10.1996 JP 29071896; 19.02.1997 JP 3529497; 10.03.1997 JP 5517197; 27.05.1997 JP 13654597
(71) Applicant: SANYO ELECTRIC Co., Ltd., Moriguchi-shi, Osaka 570 (JP)
(72) Inventor: NOGUCHI, Takashi, Yao City, Osaka 581 (JP); YOSHII, Syoichi, Fujiidera City, Osaka 583 (JP); KOBAYASHI, Makoto, Neyagawa City, Osaka 572 (JP); ARAI, Kazuhiro, Kadoma City, Osaka 571 (JP)
(74) Representative: Glawe, Delfs, Moll & Partner
(86) International application number: JP9703920
(87) International publication number: WO9819213

(57) **Abstract**

A back projection display has a reflecting means 7 which reflects image light from an image projector 4 toward the back side of a diffusion screen 3, a light separating means 8 which is provided on the back side of the diffusion screen 3 and reflects the image light toward the reflecting means 4, and a 1st reflecting mirror 6 which is a total reflecting mirror. The reflecting means 4 is composed of a 2nd reflecting mirror 72 which is a total reflecting mirror and a 1/4-wavelength plate 71 and reflects the incident image light with 90° polarization. The light separating means 8 is composed of a plane-polarization mirror and transmits P-wave polarized light only and reflects light of other polarization. If P-wave image light is emitted from the image projector 4, the light is changed to S-wave image light by the reflecting means. Therefore, the image light traveling toward the screen 3 is reflected from the light separating means 8 and travels toward the reflecting means 4 again. As the image light is subjected to further 90° polarization by the reflecting means, the light is changed to P-wave polarized light and travels toward the screen 3. As the separating means 8 transmits the P-wave polarized light, the image light is transmitted by the separating means 8 and reaches the screen 3. As the reflection is repeated a plurality of times between the reflecting means 4 and the light separating means, a long optical path can be obtained even if the display is thin.

## Description

### Field of the Invention

The present invention relates to a back projection display, particularly to a back projection display in which an image projected from an image projector is received at a back side of a screen and an image light is emitted to a viewer who is positioned in front of the screen.

### Background of the Invention

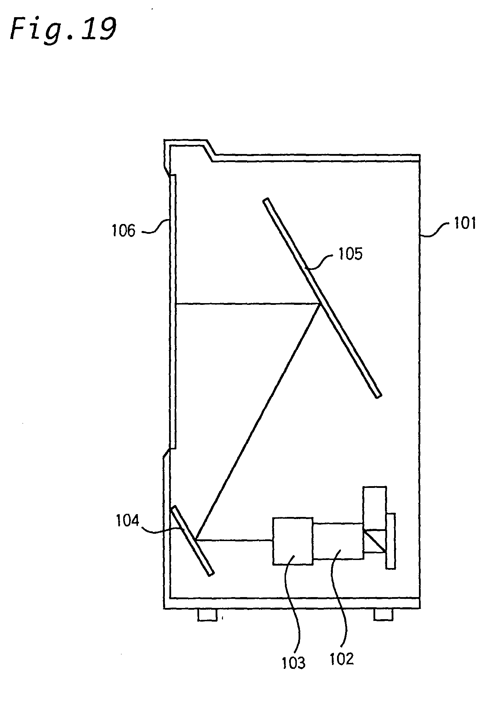

Fig. 19 is a schematic view showing the construction of a conventional back projection display. The back projection display is composed of a projector 102 placed in a case 101, a projection lens 103, a reflection mirrors 104, 105, and a transmitting diffusion screen 106. A projected image light from the projector 102 is magnified and projected by a projection lens 103, then reflected from the reflection mirrors 104, 105, and is incident to the back side of the transparent diffusion screen 106. A viewer can observe an image from a position facing to the diffusion screen 106. A back projection display of this type has an advantage in that a large screen is easily applied in comparison with a device which is equipped with a cathode ray tube as a display means.

In this case, the application of a larger screen requires to use a projection lens 103 with greater magnification or extend a length of optical path from the projector 102 to the screen 106.

However, magnification of a projection lens can not be infinite. Furthermore, depending on the arrangement and construction of reflection mirrors, the width of the case 101 can not reduce when using the projection lens with a greater magnification. The extended length of optical path from the projector 102 to the screen 106 also prevents the width of the case 101 from being short.

The present invention has an objective to provide a back projection display, which is equipped with a larger screen, with less width of the case than that of the conventional one.

The invention also aims that the screen is adjustable in any direction so that the back projection display can be used for a monitor display of a personal computer.

Usually a brightness of a projector for a back projection display is lower than that of a cathode ray tube. Increase in power of a light source in the projector 102 is required in order to improve the brightness. Increase in power of a light source results in more heat generated by a light. It is necessary to equip a fin of large power with a light source lamp to eliminate the heat by using a large fan placed adjacent to the fin.

A large and high-power fan can not shorten the width of the back projection display. Furthermore, noise from a large and high-power fan interferes the viewer.

This invention makes a fan unnecessary or smaller in size to shorten the width of a back projection display and remove noise which interferes the viewer.

### Disclosure of the Invention

A back projection display of the present invention is provided with a 1st optical means reflecting an image light from an image projector toward the back side of a screen, and a 2nd optical means which is provided on the back side of the screen and reflects the image light toward the 1st optical means, and has a construction in which the image light, that is reflected one or more times from the 2nd optical means, reaches the 1st optical means and is reflected from the 1st optical means, transmits the 2nd optical means and reaches the screen.

The above construction in which the image light travels between the 1st and 2nd optical means can extend the distance between the image light and the screen (a light path). As a result, the width of a back projection display can be reduced.

The 1st optical means may have a construction in which it reflects an incident image light subjected to polarization of a predetermined angle, and the 2nd optical means may have a construction in which it transmits the particular polarized light and reflects other polarized light.

In this construction, for example, the 2nd optical means transmits only the 2nd polarized light and reflects other polarized light.

When the 1st polarized image light is emitted from the image projector to the back side of the screen, the image light is reflected from the 2nd optical means and reaches the 1st optical means. The 1st optical means converts the 1st polarized image light into other polarized image light and reflects it. If the other polarized image light which is reflected from the 1st optical means is the 2nd polarized light, it transmits the 2nd optical means and reaches the screen. When the image light is not the 2nd polarized light, it travels to the 1st optical means again, and become other polarized image light. When the image light reflected from the 1st optical means becomes the 2nd polarized light, it transmits the 2nd optical means and reaches the screen. In this example, polarized light of the image light emitted from the image projector is different from polarized light of the image light transmitting the 2nd optical means.

When the 2nd polarized image light is emitted to reach the 1st optical means directly or by a total reflection from the image projector, the image light is reflected and reaches the 2nd optical means as other polarized image light. If the image light which is of other polarized light is not the 2nd polarized light, it travels to the 1st optical means again, and becomes the other polarized image light. When the image light which is of other polarized light is the 2nd polarized light, it transmits the 2nd optical means and reaches the screen. In this example, polarized light of the image light emitted from the image projector and the image light transmitting the 2nd optical means are the same. The image light emitted from the image projector is, at first, guided to the 1st optical means directly or by a total reflection.

The 1st optical means is composed of a total reflecting mirror, a phase difference generating portion provided on the light incident surface of the total reflecting mirror, and the phase difference generating portion may be constructed so as to polarize the light transmitting the phase difference generating portion by half of predetermined angle.

The 2nd optical means may be a plane-polarization mirror. The plane-polarization mirror makes it possible to reduce the width of the case as compared with such as a prism which is cubic shape.

The image projector may radiate only the predetermined polarized image light.

A light source provided with the image projector may be composed of an LED which emits red light, an LED which emits green light, and an LED which emits blue light. It also may be composed of an LED which emits white light. An LED rather than a lamp can achieve even and wide range of color reproduction with high purity and also can save the life of a light source.

The light source provided with the image projector may be composed of a metal halide lamp. The metal halide lamp has higher color temperature (5,000 - 7,000°K) and higher efficiency of light emission (50 - 801 m/W) than a conventional halogen lamp. And, colored image which is clearer than conventional one can be magnified and projected.

The screen may be formed in the shape of the concavely curved surface with respect to the viewer. In this construction, the viewer has a feeling of being surrounded by an image which has a shape of a concavely curved surface. Therefore, the viewer feels as if he/she was present, and can view a more natural three-dimensional image. The shape of the concavely curved surface may be one curved in a circular arc shape at least in horizontal direction. In a case where the shape of the concavely curved surface is one curved in a circular arc shape in horizontal direction, even if back projection displays are laterally connected to achieve a large screen, adjacent screens of the respective back projection displays can constitute a continuous circular arc-shaped concavely curved surface. Therefore, an unnatural step can be prevented from being formed in an image stretching over the adjacent screens. It goes without saying that even if the back projection displays are connected even longitudinally to further achieve a larger screen, adjacent upper and lower screens in the respective back projection displays constitute a continuous surface. Therefore, an unnatural step can be prevented from being formed in an image stretching over the adjacent upper and lower screens. Further, even when the shape of the concavely curved surface is one also curved in a circular arc shape in vertical direction not only in horizontal direction, that is, forming a spherical surface, a large screen can be similarly achieved.

The screen is provided with a diffusion layer on the light emitting side and a transparent layer on the light incident side. The diffusion layer may be formed in concavely curved shape with respect to a viewer, and the transparent layer may be formed in concavely curved shape with respect to the image projector. The distance of image forming is set so as to be a distance between the light emitting portion of the image projector and the center of the diffusion layer which is in a concavely curved shape. In this case, the distance between the image projection display device and the peripheral of the diffusion layer becomes longer than the distance of image forming, resulting in shift in the focus. As described above, when the transparent layer forms a concavely curved shape with respect to the image projector, a shift in a focus is prevented by refraction effect.

The screen is provided with a diffusion layer on the light emission surface and a transparent layer on the light incident surface. The diffusion layer is formed in a concavely curved shape with respect to a viewer, and the transparent layer is formed in a concavely curved shape with respect to a viewer and may be formed so as to constitute a Fresnel lens. In this case, it is possible to increase the directivity of light.

Means to swing and/or rotate a case of the back projection display may be provided so that the direction of a screen is adjustable to a viewer. Also, support sticks maintaining a position of the case of the back projection display and preventing the case from falling may be provided.

Heat releasing means provided on the back side of the 1st optical means and heat conducting means conducting the heat generated by the image projector to the heat releasing means may be provided. The heat releasing means can be equipped on the rear side of the 1st optical means through materials with low heat conductivity.

### Brief Description of the Drawings

Fig. 1 is a schematic view showing one of the examples for the construction of a back projection display of the present invention.
Fig. 2 is an explanatory view showing one of the examples for the construction of the image projector of Fig. 1.
Fig. 3 is an explanatory view showing another example for the construction of the image projection display device of Fig. 1.
Fig. 4 is an explanatory view showing an operation of the back projection display of Fig. 1.
Fig. 5 is an explanatory view showing an operation of the back projection display of Fig. 1.
Fig. 6 is an explanatory view showing an operation of the back projection display of Fig. 1.
Fig. 7 is an explanatory view showing an operation of the back projection display of Fig. 1.
Fig. 8 is a perspective view showing an appearance of a back projection display of which screen is formed in concavely curved shape.
Fig. 9 is an explanatory view simply showing one of the examples for the interior of the back projection display of Fig. 8.
Fig. 10 is an explanatory view simply showing another example for the interior of the back projection display of Fig. 8.
Fig. 11 is an explanatory view showing that two sets of the back projection display of Fig. 10 are placed side by side.
Fig. 12 is a perspective view showing a back projection display which can adjust the direction of a screen by swinging and rotating the case.
Fig. 13 is a longitudinal cross sectional view of the back projection display of Fig. 12.
Fig. 14 is a perspective view showing a back projection display of which case can swing back and forth and which is equipped with support sticks to keep the current position.
Fig. 15 is a longitudinal cross sectional view of a back projection display which is equipped with a heat releasing means.
Fig. 16 is a perspective view of the back projection display of Fig. 15.
Fig. 17 is a perspective view showing a heat releasing means and heat transmitting means of the back projection display of Fig. 15.

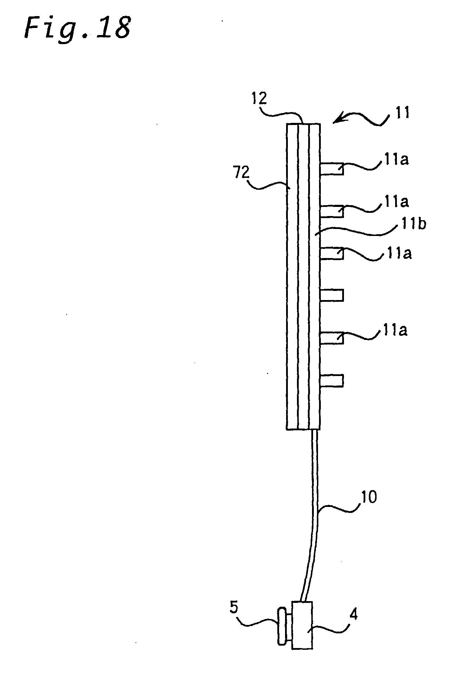

Fig. 18 is a side view showing a heat releasing means and heat transmitting means of the back projection display of Fig. 15.
Fig. 19 is a longitudinal cross sectional view of a conventional back projection display.

### Description of the Preferred Embodiment

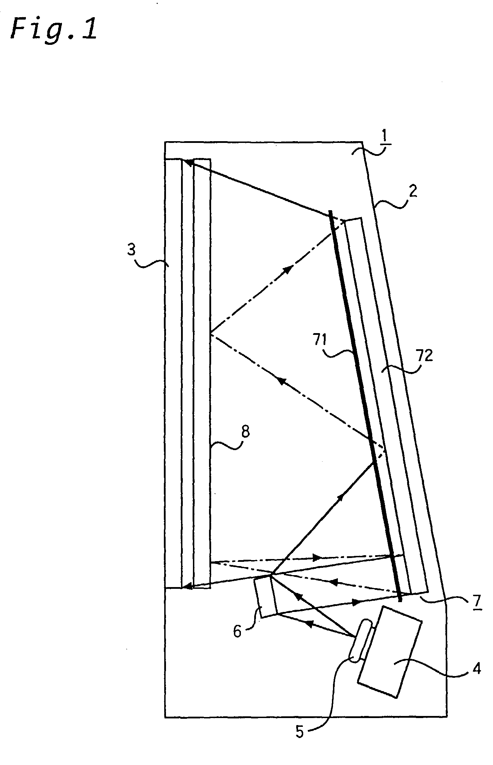

Fig. 1 is a schematic view showing a construction of a back projection display 1 of this embodiment. A transparent diffusion screen 3 is provided on a front side of a case 2 which forms an appearance of the back projection display 1. An image projector 4 is provided on the bottom of the interior of the case 2. An image light projected from the image projector 4 reaches the back side of the diffusion screen 3 through a 1st reflection mirror 6, a reflecting means (a 1st optical means) 7, and a light separating means (a 2nd optical means) 8.

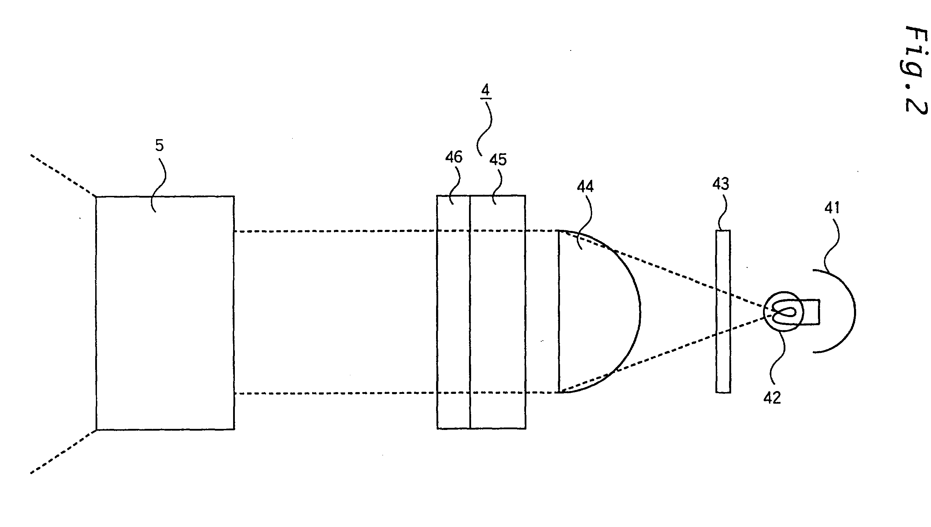

Fig. 2 is a model view showing a specific construction of the image projector 4. A reflector 41, a metal halide lamp 42 as a light source, and a UV/IR filter 43 are arranged in this order. A condenser lens 44, an LCD panel 45, and a color filter 46 are placed in this order in front of the UV/IV filter 43. White light is radiated from the metal halide lamp 42. Ultra violet ray and infrared ray contained in the white light are removed when transmitting the UV/IV filter 43.

The white light transmitted through the UV/IV filter 43 is converged at the condenser lens 44 and is incident to the LCD panel 45. An monochrome image light which is obtained through the LCD panel 45 is colored by transmitting a color filter 46. The color filter 46 has many micro regions in matrix. A filter portion which transmits only red (R) component, a filter portion which transmits only green (G) component, and a filter portion which transmits only blue (B) component are formed in each region. The colored image light emitted from the color filter 46 is magnified and projected by the projection lens 5.

The metal halide lamp 42 used as a light source has higher color temperature (5,000 - 7,000 °K) and higher efficiency of light emission (50 - 801 m/W) than a conventional halogen lamp. And, clearer colored image than conventional one can be magnified and projected. An aspherical lens is employed as a condenser lens 44, which can collect a large amount of light around the lens. Furthermore, coating of reflection prevention film on a surface of the lens improve the transmittancy so as to increase the illuminance. As a result, a bright and clear image is magnified and projected on a screen 3.

In this embodiment, polarizing plates on the incident and emitting sides of the LCD panel 45 (not shown) are arranged to radiate an image light which has P-wave polarized light of the oscillation direction from the image projector 4.

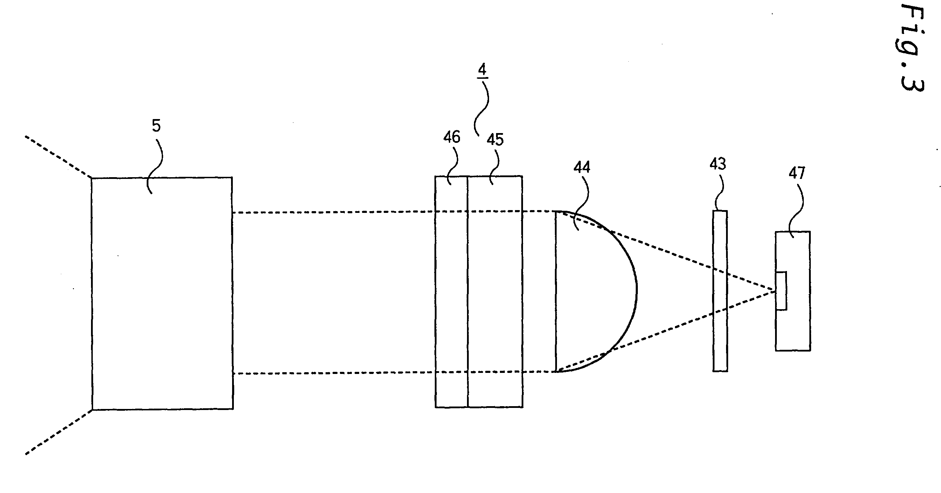

Fig. 3 shows another construction of the image projector 4. In this construction, a white LED light source 47 which emits white light (which has the three primary colors; red, green, and blue), instead of the metal halide lamp 42 of Fig.2. The white LED light source 47 is composed of a single or a plurality of white light emitting LEDs. A single set or a plural sets of LEDs which respectively radiates red light, green light, or blue light can be used as a light source. When an LED is used as a light source as described in Fig. 3, rather than a lamp can achieve even and wide range of color reproduction with high purity and also can save the life of a light source.

A reflecting means 7 is composed of a 2nd reflection mirror 72 which is a total reflecting mirror, and a 1/4-wavelength plate 71 as a phase difference generator which is provided on the light emission surface of the 2nd reflection mirror 72. The reflecting means 7 inclines slightly and is arranged at the position spaced apart from the back side of the diffusion screen 3 by predetermined length (the light incident surface).

A light separating means 8 is composed of a plane-polarization mirror which transmits only P-wave polarized light and reflects other polarized light. The light separating means 8 is arranged on the back side of the diffusion screen 3 (the light incident surface).

Explanation for a process in which the color image light emitted from the projection lens 6 reaches the diffusion screen 3 will be made.

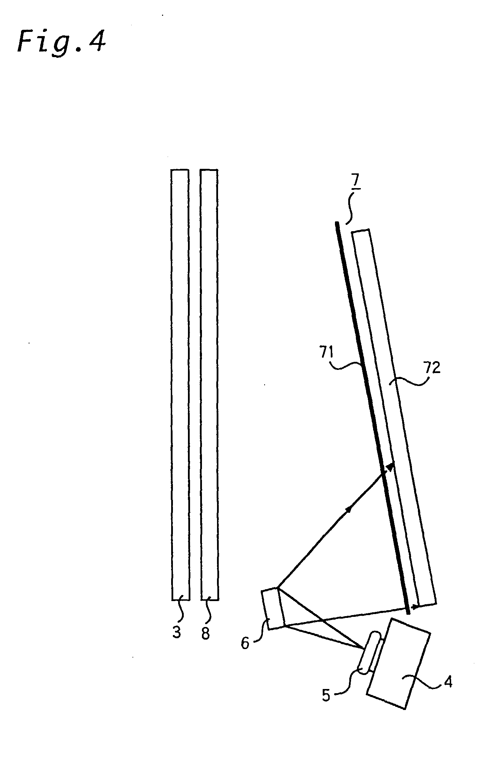

As shown in Fig. 4, the color image light (indicated with the straight line in the figure) which is composed by P-wave polarized light emitted from the projection lens 6 is reflected from the 1st reflection mirror as a total reflecting mirror and reaches the lower area of the reflecting means 7. The P-polarized color image light becomes an image light of which oscillation direction is rotated by 45° by passing through the 1/4-wavelength plate 71 of the reflecting means 7.

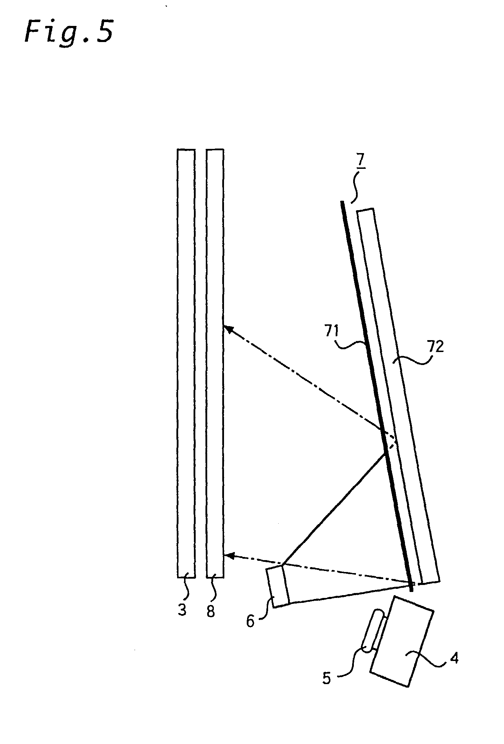

As shown in Fig. 5, a color image light passes through the 1/4-wavelength plate 71 of the reflecting means 7 is reflected from the 2nd reflection mirror 72 of the reflecting means 7 and pass (transmit) the 1/4-wavelength plate 71 again. In this case, the oscillation direction of the color image light turns by 45°, and the color image light which is magnified and travels toward the lower area of the light separating means 8 becomes a S-polarized light whose oscillation direction turns by 90° against P-wave polarized light (indicated as broken line in the figure.)

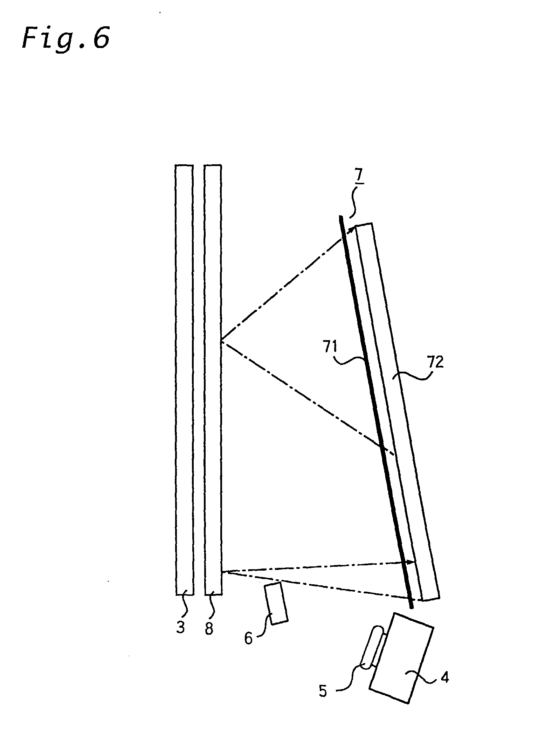

As shown in Fig. 6, the light separating means 8 transmits only P-wave polarized light. S-polarized color image light which reaches the light separating means 8 reflects, is magnified, and travels to the reflecting means 7 again. The S-polarized color image light is radiated nearly all area except the lower area of the reflecting means 7.

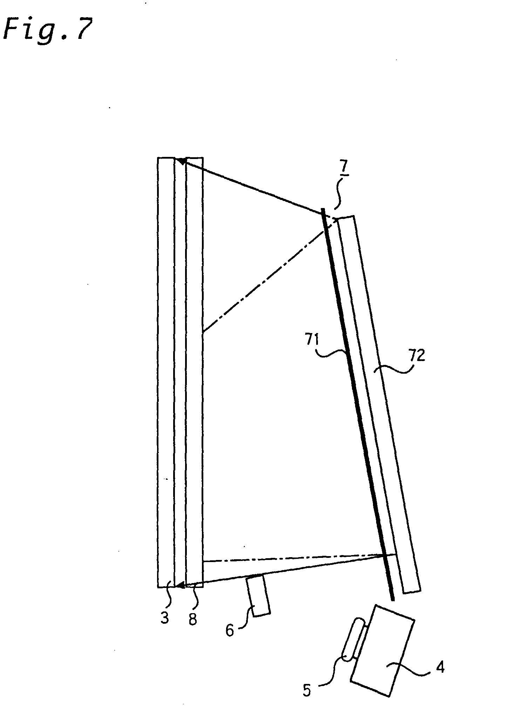

As shown in Fig. 7, the S-polarized color image light becomes an image light of which oscillation direction is rotated by 45° by passing through the 1/4-wavelength plate 71 of the reflecting means 7. And it is reflected from the 2nd reflecting mirror of the reflecting means 7 and transmits the 1/4-wavelength plate 71. The oscillation direction of the color image light is rotated by 45° and the color image light which is magnified and travels toward a total area of the light separating portion 8 becomes the P-wave polarized light rotated by 90° against S-wave.

The light separating means 8 transmits only P-wave polarized light. P-polarized color image light at the light separating means 8 transmits and is projected on the back side of the diffusion screen 3. Therefore, a viewer can observe images at a position in front of the diffusion screen 3.

As described above, the distance which the image light travels from the projection lens 5 to the diffusion screen 3 can be extended as the image light reflects several times from the reflecting means 7 and the light separating means 8. Therefore, the screen 3 can be enlarged in size while reducing the width of the case 1 as compared with the conventional one.

Although the invention has been described in its preferred form, it is understood that the present disclosure of the preferred form has been changed in the details of construction and the combination and arrangement of parts may be resorted to without departing from the spirit and the scope of the invention as hereinafter claimed.

The above embodiment is not limited by the above construction where an image light emitted from the image projector 4 is incident to the reflecting means 7 after the image light is reflected from the 1st reflection mirror 6. For example, a construction where the 1st reflection mirror 6 is not equipped and an image light emitted from the image projector 4 is incident to the reflecting means directly may be applicable. An image light emitted from the image projector 4 may also be projected to the light separating means 8 first, and then the image light reflected to the light separating means 8 may be incident to the reflecting means 7. In this case, the construction where image light being composed of polarized light except for a polarized light which transmits the light separating means 8 is radiated from the image projector 4 may be available.

The construction is not limited by the above one where the oscillation direction is rotated by 90° when it is reflected once by using a 1/4-wavelength plate 71 as a phase difference generating member. For example, other angles (e.g. 60°) is also acceptable as the rotating angle of the oscillation direction by a phase difference generating member.

A construction in which image light of polarized light of other oscillation direction can be radiated is also possible, though an explanation made on a construction that P-polarized image light is radiated from the image projector 4 is made. In this case, image light needs to be converted into polarized light which can at last transmits the light separating portion 8 by reflecting predetermined times from the reflecting means 7.

The above embodiment is for two-dimension display. It is also available for three-dimension display. In order to view stereoscopic image by the three-dimensional image display without special eye-glasses, a lenticular plate or parallax barrier is to be provided between a diffusion screen and a viewer.

### (Embodiment 2)

The first embodiment describes the diffusion screen of flat shape. The second embodiment explains about the diffusion screen which has a shape of a concavely curved surface with respect to a viewer.

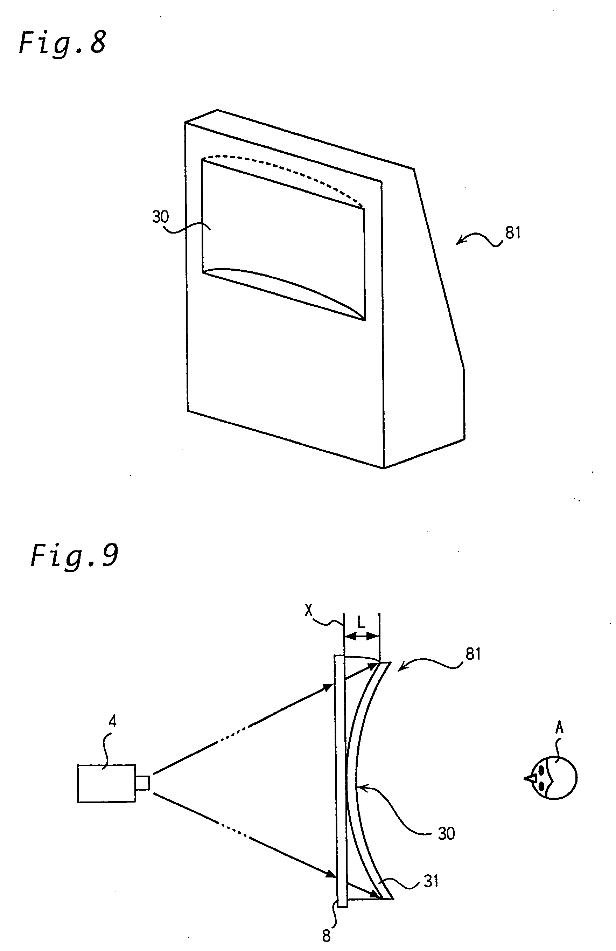

Fig. 8 is a perspective view showing an appearance of a back projection display 81 in the second embodiment. Fig. 9 is a schematic plan view to explain a shape of a diffusion screen 30 of the back projection display 81. In this embodiment, the construction in which an image light emitted from the image projector 4 is reflected several times to be led to the diffusion screen is omitted.

As shown in Fig. 9, the diffusion screen 30 of the back projection display 81 is provided with a diffusion layer 31 which is formed into a shape of the concavely curved surface with respect to a viewer. The diffusion layer 31 is formed by embossing a transparent plate formed on the concavely curved surface or by putting a diffusion sheet (a sheet on which matted concavo-convex pattern or a unit lens portion of a semi cylindrical shape is formed) on a concavely curved surface of a transparent plate, or by mixing micro diffusion particles into the diffusion layer.

The concavely curved surface in the diffusion layer 31 shall be one curved in a circular arc shape only in the horizontal direction, as in the above mentioned embodiment, that is, a shape which can be obtained when a cylinder is cut perpendicularly at some point. When the diffusion screen 30 is constructed for a 45-inch screen, for example, the curvature of the concavely curved surface in the diffusion layer 31 is so set that the distance L between a virtual plane X in contact with the center of the diffusion layer 31 and a peripheral edge in the lateral direction of the diffusion layer 31 is approximately 30mm.

As described in the foregoing, the diffusion layer 31 of the diffusion screen 30 is formed in the shape of the concavely curved surface with respect to the viewer, whereby the viewer has a feeling of being surrounded by an image forming a shape of a concavely curved surface. Therefore, the viewer feels as if he or she was present and can view a more natural three-dimensional image.

The diffusion layer 31 has a surface of which shape is concavely curved. Consequently, there occurs a shift in the focus of an image forming surface at its peripheral edge. When a projection distance between the image projector 4 and the diffusion screen 30 is approximately 60 to 70 cm, however, a shift in the focus of the entire image formed on the diffusion screen 30, for example, due to the shift in the focus of the image forming surface at the peripheral edge of the diffusion layer 2a may be allowable in most of cases, while a shift in the focus, when the distance is longer, may not be allowable.

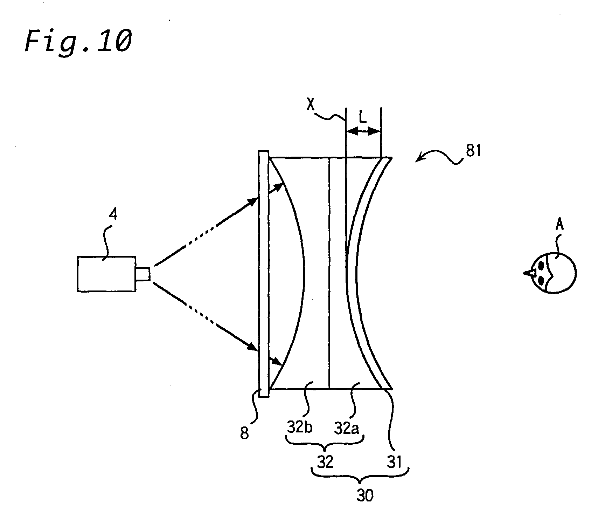

Fig. 10 shows a construction of a diffusion screen 30 which removes a shift in a focus of the image forming surface at the peripheral edge. The diffusion screen 30 of Fig. 10 is composed of a diffusion layer 31 positioned on the side of a viewer A and a transparent layer 32 positioned on the side of an image projector 4. The transparent layer 32 is composed of a 1st transparent layer 32a which is positioned at the side of a viewer A and is formed in a concavely curved shape with respect to the viewer A, and a 2nd transparent layer 32b which is positioned at the side of a image projector 1 and is formed in a concavely curved shape with respect to the image projector 4, and they are fixed to the transparent layer with a transparent glue. The diffusion layer 31 is formed on the concavely curved surface of the 1st transparent layer 32a and the diffusion layer 31 is formed in a concavely curved shape with respect to a viewer A. The diffusion layer 31 is formed by embossing to a transparent plate formed on the concavely curved surface or by putting a diffusion sheet (a sheet on which matted concavo-convex pattern or a unit lens portion of a semi cylindrical shape is formed) on a concavely curved surface of a transparent plate, or by mixing micro diffusion particles into the diffusion layer.

As shown in Fig. 9, when the diffusion screen 30 is constructed for a 45-inch screen, for example, the curvature of the concavely curved surface in the diffusion layer 31, or the concavely curved surface of the 1st transparent layer 32a, is so set that the distance L between a virtual plane X in contact with the center of the diffusion layer 31 and a peripheral edge in the lateral direction of the diffusion layer 31 is approximately 30mm.

The concavely curved surface of the 2nd transparent layer 32b is arranged so as to remove a shift of image forming surface at the peripheral edge due to a concavely curved surface of the transparent layer 31. That is, because an image forming surface of a projected image from the image projector 4 is set so as to correspond to the virtual plane X which is in contact with the center of the diffusion layer 31, a shift in a focus of image forming surface at the peripheral edge occurs. Therefore, the image forming surface is made farther from the image projector 4 corresponding to the concavely curved surface of the diffusion layer 31 by using refraction effect of the concavely curved surface of the 2nd transparent layer 32b.

In the construction of Fig. 10, the projected image which is projected from the image projector 4 reaches the 2nd transparent layer 32b in the diffusion screen 30 and is subjected to the refraction effect at the concavely curved surface of the 2nd transparent layer 32b. As a result, the distance of image forming at the right and left peripheral edge of the diffusion screen 30 is extended and fits along the concavely curved surface of the diffusion layer 31. An image can be formed on the diffusion layer 31 without a shift in a focus.

A concavely curved surface of the 2nd transparent layer 32b may be formed so as to form a Fresnel lens. In this case, it is possible to increase the directivity of light.

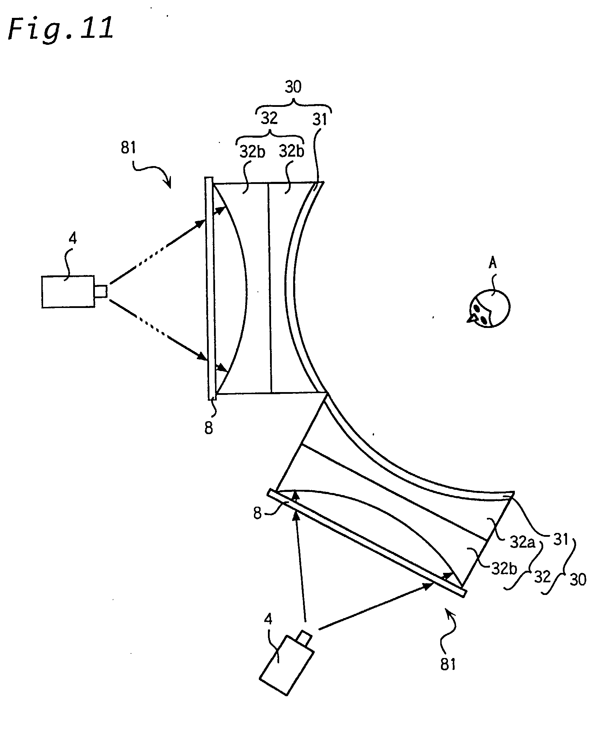

Fig. 11 shows an aggregate type back projection display constructed by laterally connecting diffusion screens 30 of Fig. 10. Diffusion layers 31 of adjacent diffusion screens 30 in the respective back projection displays constitute a continuous circular arc-shaped concavely curved surface. Therefore, an unnatural step can be prevented from being formed in an image stretching over the adjacent diffusion screens 30. It goes without saying that even if back projection displays are connected even longitudinally to achieve a larger screen, adjacent upper and lower diffusion screens in the respective back projection displays constitute a continuous surface. Therefore, an unnatural step can be prevented from being formed in an image stretching over the adjacent upper and lower diffusion screens.

Although the diffusion layer 31 of Fig. 11 is curved in a cylindrical arc shape only in a horizontal direction, it is also curved in a cylindrical arc shape in a perpendicular direction, too. That is, a shape which can be obtained by cutting a sphere perpendicularly is also available. In this case, the size of a screen can also enlarge.

### (Embodiment 3)

This embodiment describes a construction in which an angle of screen is adjustable.

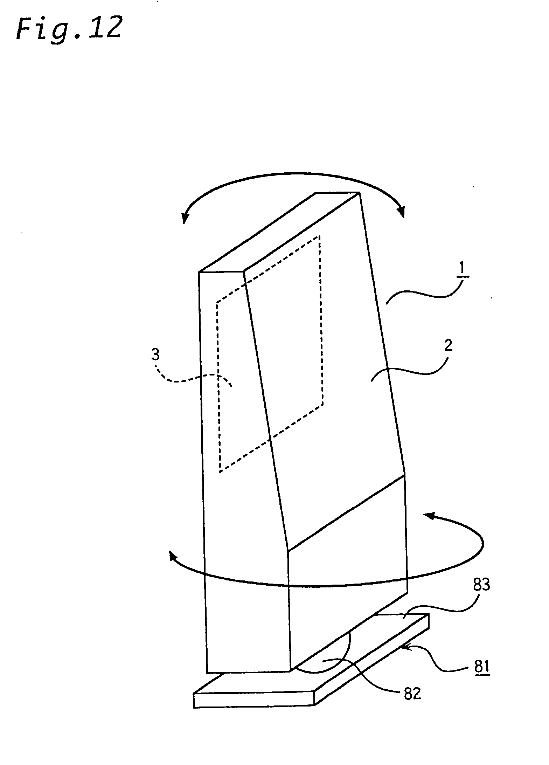

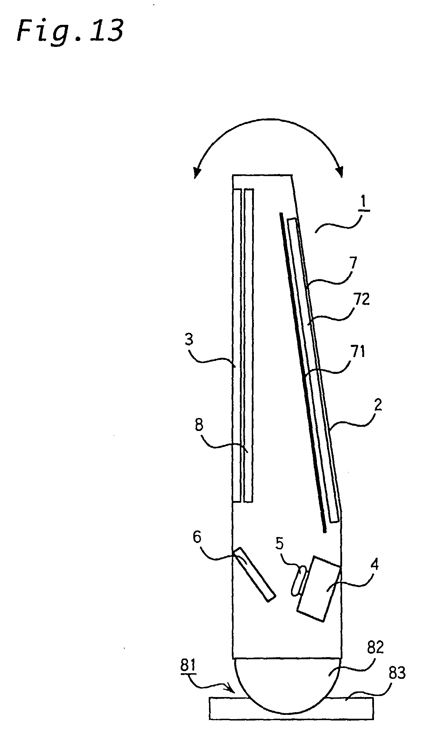

Fig. 12 is a perspective view showing an appearance of a back projection display 1 which is provided with a 1st angle adjusting means 81. Fig. 13 is a cross sectional view simply showing the back projection display 1 which is provided with the 1st angle adjusting means 81. The reference numerals for the compositions shown in Fig. 1 and so on are not explained.

The 1st angle adjusting means 81 is composed of a support stand 83, and a swinging support portion 82 in a semi-spherical shape and can rotate and swing freely on the support stand 83. A spherical surface of the support standing 83 is fitted to the support stand 83, and a flat surface of a support standing 83 is fixed to the bottom of the case 2 of the back projection display 1. In such a construction, a viewer can swing and rotate the whole body of the back projection display 1 in order to adjust the direction of the screen 3. In a construction of Fig. 12, when a swinging support portion in a semi-cylindrical shape is used instead of a swing support portion in a semi-spherical shape 82, the body can swing either back and forth, or right and left.

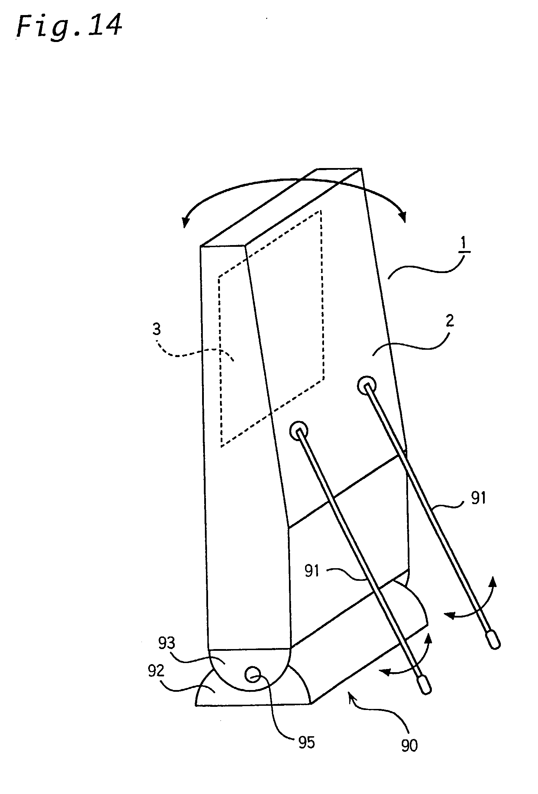

Fig. 14 is a perspective view showing an appearance of a back projection display 1 which is provided with a 2nd angle adjusting means 90.

A 2nd angle adjusting means 90 is composed of a support stand in a semi-cylindrical shape 92, a connecting portion 93 which is provided at the bottom of both sides of the back projection display 1, a connecting rod 95 which connects the connecting portion 93 and the support stand 92 so as to be rotatable in horizontal direction, and support sticks 91 which are provided on the back of the back projection display 1. The support sticks 91 are provided so as to be rotatable in lateral direction (a surface which is in perpendicular against the connecting rod 95). By touching tips of the support rods 91 on the floor, the position of the back projection display 1 can be maintained and the unit is prevented away from falling down. A swing angle of the back projection display 1 can be adjusted by changing points where tips of the support sticks 91 touch. The direction of the diffusion screen 3 can be adjusted back and forth as a viewer's desire.

### (Embodiment 4)

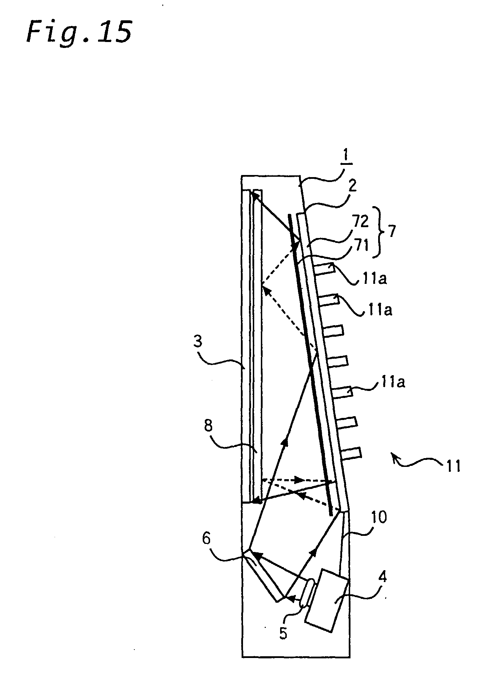

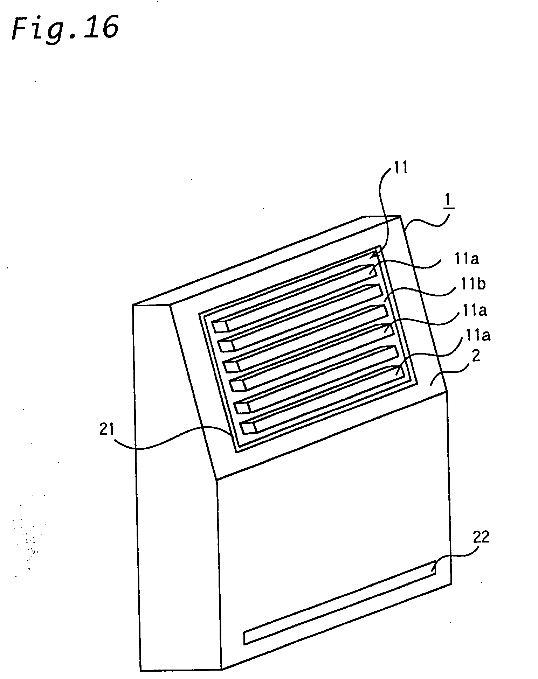

This embodiment describes a construction in which heat generated by the light source 42 (Fig. 2) or 47 (Fig. 3) of the image projector 4 is released outside the case. Fig. 15 is a longitudinal cross sectional view of the back projection display 1 of this embodiment. Fig. 16 is a perspective view of the back side of the back projection display 1.

A 1st opening 21 is formed on the back of the case 2. The position of the 1st opening 21 depends on where the 2nd reflecting mirror 72 is. A 2nd opening 22 is formed on the lower back of the case. Heat releasing means 11 is equipped on the back of the 2nd reflecting mirror 72, and they are exposed outside the case through the opening 21. The heat releasing means 11 is composed of fins 11a, heat releasing plate 11b which support the fins by one surface. The heat releasing plate 11b and fins 11a are made of aluminum alloy or the like. Other materials with high heat conductivity are also available.

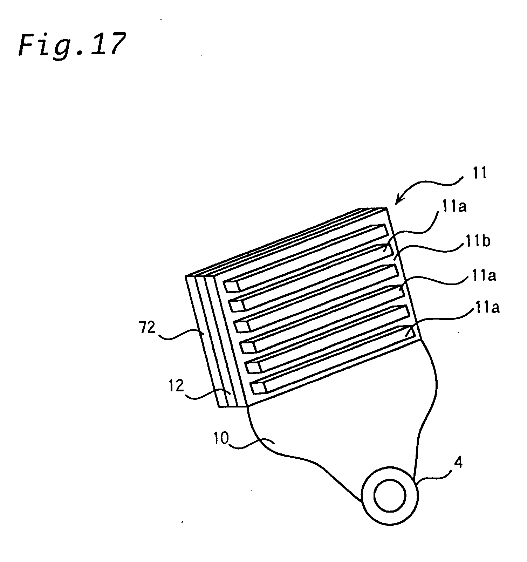

As shown in Fig. 17, a heat insulating plate 12 made of materials with low heat conductivity (for example, silicon gum can be used) is provided on the other side of the heat releasing plate 11b. The heat releasing plate 11b is fixed on the back side of the 2nd reflecting mirror 72 through the heat insulating plate 12. Therefore, heat of high temperature from the heat releasing plate 11b is prevented from transmitting to the 2nd reflection mirror 72 and the heat does not affect the reflection characteristics of the 2nd reflecting mirror 72.

A heat conducting means 10 is provided between the heat releasing means 11 and the image projector 4. The heat conducting means 10 is made by knitting copper line reticulately and is relatively deformable and flexible. The heat conducting means 10 can be made of other materials with high heat conductivity and can be constructed by using heat pipe construction.

Heat generated in the image projector 4 is conducted to the heat releasing means 11 through the heat conducting means 10. The heat transmitted to the heat releasing means 11 is released outside by the fins 11a. Heat in the image display device 4 is released around the back side of the reflecting means 7. Therefore, it is not required to equip fins near the image projector 4 unlike the conventional device, and a fan for heat release with high power becomes unnecessary or can be changed into one with lower power. As a result, the smaller size and the less width of the equipment, and less noise by the fan for releasing heat can be achieved.

### Industrial Field of the Invention

As described above, the back projection display of the present invention is suitable for a TV screen and a monitor for a computer with a thin, but large sized screen.

## Claims

1. A back projection display, comprising;
a 1st optical means reflecting image light from an image projector toward a back side of a screen, and
a 2nd optical means which is provided on the back side of the screen and reflects the image light toward the 1st optical means, and
the image light, which is reflected at least one or more times from said 2nd optical means and reaches said 1st optical means to reflect therefrom, reaches said screen after transmitting said 2nd optical means.

2. The back projection display according to claim 1, wherein,
said 1st optical means reflects the incident image light which is subjected to polarization by a predetermined angle,
said 2nd optical means transmits specific polarized light and reflects other polarized light.

3. The back projection display according to claim 2, wherein,
said 1st optical means is composed of a total reflecting mirror, a phase difference generating portion provided on the light incident surface of the total reflecting mirror, and
said phase difference generating portion is constructed so as to polarize the light transmitting the phase difference generating portion by degrees half of said predetermined angle.

4. The back projection display according to claim 2, wherein, said 2nd optical means is a plane-polarization mirror.

5. The back projection display according to claim 2, wherein, said image projector radiates only the image light of predetermined polarization.

6. The back projection display according to claim 5, wherein,
polarized light of said image light emitted from said image projector is different from polarized light of the image light transmitting through said 2nd optical means.

7. The back projection display according to claim 5, wherein,
polarized light of the image light emitted from said image projector is same as polarized light of the image light transmitting said 2nd optical means, and,
the image light emitted from said image projector is led to said 1st optical means at first directly or by a total reflection.

8. The back projection display according to claims 1 to 7, wherein,
a light source provided with said image projector is composed of an LED which emits red light, an LED which emits green light, and an LED which emits blue light.

9. The back projection display according to claims 1 to 7, wherein,
the light source provided with said image projector is composed of an LED which emits white light.

10. The back projection display according to claims 1 to 7, wherein,
the light source provided with said image projector is composed of a metal halide lamp.

11. The back projection display according to claims 1 to 7, wherein,
said screen is formed in a concavely curved shape with respect to a viewer.

12. The back projection display according to claim 11, wherein,
said concavely curved shape is curved in a circular arc shape at least in horizontal direction.

13. The back projection display according to claims 1 to 7, wherein,
said screen is provided with a diffusion layer on the light emitting surface and with a transparent layer on the light incident surface, and
said diffusion layer is formed in concavely curved shape with respect to a viewer,
said transparent layer is formed in concavely curved shape with respect to the image projector.

14. The back projection display according to claim 13, wherein,
said concavely curved shape is curved in a circular arc shape at least in horizontal direction.

15. The back projection display according to claims 1 to 7, wherein,
said screen is provided with a diffusion layer on the light emitting side and with a transparent layer on the light incident side, and
said diffusion layer is formed in concavely curved shape with respect to a viewer,
said transparent layer is formed in concavely curved shape with respect to the image projector, and is formed so as to form flannel lens.

16. The back projection display according to claim 15, wherein,
said concavely curved shape is curved in a circular arc shape at least in horizontal direction.

17. The back projection display according to claims 1 to 7, wherein
means to swing and/or rotate the case of the back projection display is provided so as to adjust the direction of said screen with respect to a viewer.

18. The back projection display according to claim 17, wherein
support sticks to maintain the position of the case of the back projection display and prevent the case from falling are provided.

19. The back projection display according to claims 1 to 7, wherein
heat releasing means equipped on the back side of said 1st optical means and heat conducting means to conduct the heat generated by said image projector to said heat releasing means are provided.

20. The back projection display according to claim 19, wherein,
said heat releasing means is equipped on the back side of said 1st optical means through materials with low heat conductivity.
